# EUROPEAN PATENT APPLICATION

(11) **EP 4 554 145 A1**
(43) Date of publication of application: **14.05.2025**
(21) Application number: 23306938.4
(22) Date of filing: 09.11.2023
(51) Int. Cl.: H04L 9/40, H04B 7/06, H04W 12/122, H04W 12/63, H04W 48/04

(54) **A METHOD FOR MITIGATING A CYBER-ATTACK IN A TELECOMMUNICATION SYSTEM, AND ASSOCIATED ELECTRONIC DEVICE**

(71) Applicant: Fondation B-COM, 35510 Cesson-Sévigné (FR)
(72) Inventor: BEHRAD, Shanay, 35700 RENNES (FR); PHAN, Cao Thanh, 35520 LA MEZIERE (FR); KANJ, Mathieu, 35510 CESSON-SEVIGNE (FR); POULIQUEN, Alain, 22300 LANNION (FR); PAQUELET, Stéphane, 35700 RENNES (FR)
(74) Representative: Cabinet Beau de Loménie

(57) **Abstract**

The invention concerns a method for mitigating a cyber-attack in a telecommunication system comprising a user equipment and a base station connected to a core network of a telecommunication network. The method comprises : receiving, from the user equipment, a message for attachment of the user equipment to the telecommunication network; determining a location area of the user equipment from a transmission beam selected by the user equipment for transmitting the received message, and from a timing advance value associated to the received message; determining, from a user equipment's behavior analysis, a possible start of the cyber-attack from at least one user equipment of the determined location area ; and, as a result of the determining, preventing communications associated to the user equipment to reach the core network.

## Description

### Technical Field

The present invention generally relates to the field of telecommunications. It concerns more particularly to the resolution of cyber-attacks liable to affect the resources of a computing domain, such as a telecommunication network. The invention applies in particular to denial of service (DoS) or DDoS (Distributed DoS) cyber-attacks. The invention relates more specifically to a computer-implemented method for mitigating a cyber-attack in a telecommunication system. The invention also concerns an electronic device of a telecommunication system that implements such a mitigation method.

### Background

A DDoS attack is a malicious attempt to disrupt the normal traffic of a targeted server, service or network by overwhelming the target or its surrounding infrastructure with a flood of traffic in order to disrupt it and make it unavailable to legitimate users.

DDoS attacks are often massive and likely to compromise an important number of user equipments (fixed or mobile terminals, connected objects, servers, network resources, etc.), which may be used as relays to amplify the harmful power of these attacks. Often, DDoS attacks are carried out to extort ransom payments. Exploited machines can include computers and other networked resources such as Internet of Things (IoT) devices. IoT devices are often seen as easy targets by attackers since these devices usually run on firmware that cannot be patched, and as a consequence they do not have the same level of protection as do the modern operating systems running on most computers and smartphones.

DDoS attacks are becoming increasingly frequent and intense. They are furthermore wide-ranging, both in terms of size (volume of traffic in the attack, amplitude of the attack, etc.) and in terms of scope for harm (a single machine targeted, or multiple machines by targeting the local area network of a company, the telecommunication network of an operator, etc.). By way of example, in Q1 of 2023, a large DDoS attack of 1.3 Tbps (terabits per second) was detected which targeted a South American telecommunications provider. The attack was a multi-vector attack involving DNS ("Domain Name System") and UDP ("User Datagram Protocol") attack traffic, and lasted only a minute. This DDos attack was part of a broader campaign which included multiple terabit attacks originating from a 20,000 Mirai-variant botnet.

A particular DDoS attack, named "signaling storm attack", consists in utilizing standard mechanisms of a network control plane (i.e., the part of the network that controls how data packets are forwarded) to cause denial of service, e.g., by flooding the network control plane with invalid or repeated registration requests. This kind of attack is particularly adapted in a 5G telecommunication network (the fifth generation of telecommunication networks), since even if these invalid or repeated registration requests are rejected, they consume resources of the core network (CN) dedicated to control plane that are required during the authorization process.

However, current solutions for the DDoS attacks in the 5G networks are applied after the connection of the devices to the 5G networks and their focus is on the user plane mainly.

There is therefore a need for identifying malicious user equipment in the early stages, e.g., before impacting the control plane.

### Summary of Invention

To this end, the present invention first provides a computer-implemented method for mitigating a cyber-attack in a telecommunication system comprising a user equipment and a base station connected to a core network of a telecommunication network, the method comprising:
- receiving, from the user equipment, a message for attachment of the user equipment to the telecommunication network;
- determining a location area of the user equipment from a transmission beam selected by the user equipment for transmitting the received message, and from a timing advance value associated to the received message;
- determining, from a user equipment's behavior analysis, a possible start of the cyber-attack from at least one user equipment of the determined location area ; and, as a result of the determining,
- preventing communications associated to the user equipment to reach the core network.

This method offers the advantage of mitigating the impact of a possible denial of service resulting from the flooding of the core network (CN) of a telecommunication network with invalid or repeated registration requests.

For the sake of convenience, the terms "user equipment" and "UE" are used in this document to refer to remote a wireless equipment that wirelessly accesses a base station, whether the user equipment is a mobile device (such as a mobile telephone or smartphone) or is normally considered a stationary device (such as a desktop computer or vending machine).

Also, depending on the network type, the term "user equipment" or "UE" can refer to any component such as "remote terminal," "wireless terminal," "receive point" or "user device". It corresponds for example to a hand-held telephone, a laptop computer equipped with a mobile broadband adapter, or any other device.

In this patent document, the term "base station" or "gNB" can refer to any network infrastructure component that provide wireless access to remote terminals.

For the sake of convenience, the terms "core network" and "CN" are used in this document to refer to the heart of a telecommunication network that provides connectivity and routing services between different parts of a network and controls the flow of traffic between these parts. In literature, a core network is also known as the "backbone network".

It should also be noted that the timing advance value typically corresponds to a length of time a signal carrying the message for attachment takes to reach the base station from the user equipment.

In particular implementations, the timing advance value defines an annulus around the base station, the transmission beam selected by the user equipment for transmitting the received message defines an angular sector centered around the base station, and the location area corresponds to an intersection of the annulus and of the angular sector.

In those particular implementations, this angular sector represents the beam coverage.

In particular implementations, the user equipment's behavior analysis comprises determining whether a number of messages for attachment to the telecommunication network superior to a predetermined threshold is emitted from the location area.

In particular implementations, preventing communications associated to the user equipment to reach the core network comprises at least one of, by the base station:
- dropping message(s) emitted from the location area;
- stopping beamforming in a direction of the beam selected by the user equipment (UE) for transmitting the received message.

In that particular implementations, communications "associated to" the user equipment correspond to communications transmitted by this user equipment, destined to access the core network through the base station, or to communications usually initiated and transmitted by the base station to the core network.

In particular implementations, the base station belongs to a radio access network of the telecommunication network, the received message includes data for identifying a random access preamble selected by the user equipment from a set of predefined preambles, and the steps of receiving, determining a location area, determining a cyber-attack and preventing are implemented in the radio access network.

In particular implementations, the received message is compliant with the MSG1 message defined in the 3GPP specification TS 38.300, V17.5.0, published on June, 2023.

In particular implementations, the mitigation method is implemented by an application of a radio access network controller. In particular implementations, that controller is of type "Near Real Time RIC". This controller is for example compliant with the O-RAN specification, Near-RT RIC Architecture 4.0, "O-RAN.WG3.RICARCH-R003-v04.00", release 3, published in March 2023.

In particular implementations, the application of the radio access network controller is of type "xApp". An xApp application is typically configured to manage network functions of the radio access network in near-real time, i.e., with a short delay (e.g., inferior to 1 second). This application is typically administrated by a phone operator, or by a service provider. An xApp application is for example compliant with the O-RAN specification O-RAN Study on Security for Near Real Time RIC and xApps 2.0, "O-RAN.WG11.Security-Near-RT-RIC-xApps-TR.0-R003-v02.00", release 3, published in March 2023.

In particular implementations, the received message includes user equipment network capability data, and the steps of receiving, determining a location area, determining a cyber-attack and preventing are implemented in the core network.

In particular implementations, the mitigation method further comprises the following steps, at the core network:
- determining whether the user equipment was previously registered to the telecommunication network or to an associated telecommunication network;
- and if so, the step of preventing comprises transmitting, by the core network and to the base station, a M-Temporary Mobile Subscriber Identity to ban, the M-Temporary Mobile Subscriber Identity uniquely identifying the user equipment among a plurality of user equipment's registered to the telecommunication network or to the associated telecommunication network.

In particular implementations, the user equipment and/or the base station are compatible with the Standard ETSI TS 123 501.

In particular implementations, data transmission over the telecommunication network is compatible with the Standard ETSI TS 123 003.

According to a second aspect, the present invention concerns an electronic device of a telecommunication system comprising a user equipment, a base station connected to a core network of a telecommunication network. The electronic device includes an application software comprising:
- a module for receiving, from a user equipment, a message for attachment of the user equipment to a telecommunication network;
- a module for determining a location area of the user equipment from a transmission beam selected by the user equipment for transmitting the received message, and from a timing advance value associated to the received message;
- a module for determining, from a user equipment's behavior analysis, a possible start of a cyber-attack from at least one user equipment of the determined location area; and,
- a module for preventing communications associated to the user equipment to reach the core network or a module for transmitting an instruction to prevent communications associated to the user equipment (UE) to reach the core network (CN).

In particular implementations, the electronic device belongs to the radio access network, and comprises a radio access network controller that includes the application software. In particular implementations, that controller is of type "Near Real Time RIC". This controller is for example compliant with the O-RAN specification, Near-RT RIC Architecture 4.0, "O-RAN.WG3.RICARCH-R003-v04.00", release 3, published in March 2023.

In a variant, the electronic device belongs to the core network.

Embodiments of the present invention also extend to programs which, when run on a computer or processor, cause the computer or processor to carry out the method described above or which, when loaded into a programmable device, cause that device to become the device described above. The program may be provided by itself, or carried by a carrier medium. The carrier medium may be a storage or recording medium, or it may be a transmission medium such as a signal. A program embodying the present invention may be transitory or non-transitory.

### Brief Description of Drawings

**Figure 1** depicts for illustrative purposes a telecommunication system in which the invention is applicable.
**Figure 2** illustrates a particular implementation of the determination of the location area of a user equipment according to the invention.
**Figure 3A** illustrates a particular implementation of an electronic device according to the invention.
**Figure 3B** illustrates another particular implementation of an electronic device according to the invention.
**Figure 4A** illustrates an example of the hardware architecture of the electronic device of Figure 3A.
**Figure 4B** illustrates an example of the hardware architecture of the electronic device of Figure 3B.
**Figure 5** is a flowchart of a mitigation method according to a first embodiment of the invention.
**Figure 6** is a flowchart of a mitigation method according to a second embodiment of the invention.
**Figure 7** is a flowchart of a mitigation method according to a third embodiment of the invention.

### Detailed Description

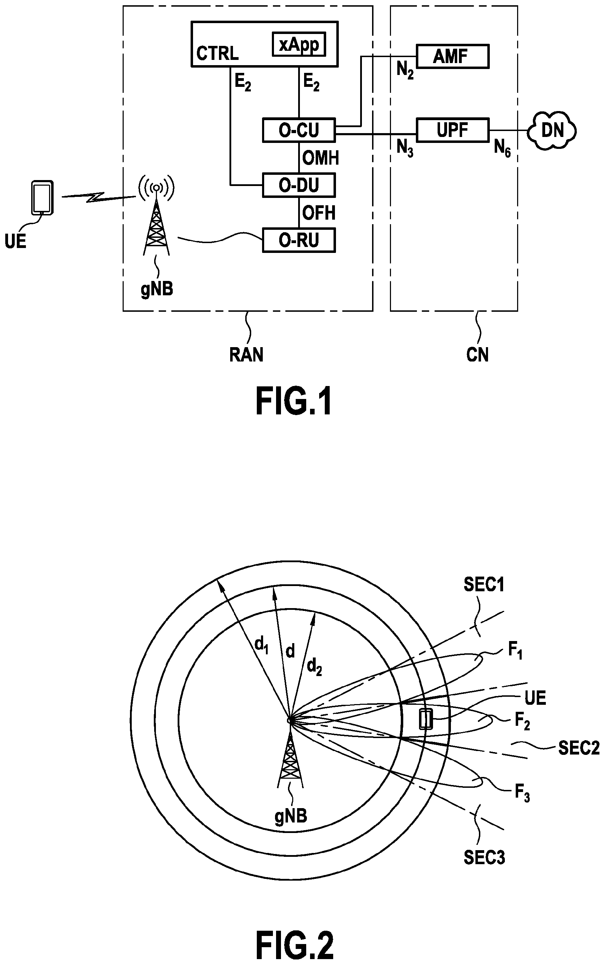

**Figure 1** depicts for illustrative purposes a telecommunication system in which the invention is applicable.

This system comprises a radio access network (RAN) including at least one base station (gNB), a core network (CN) connected to the radio access network (RAN), and at least one user equipment connected to the radio access network (RAN). The user equipment corresponds for example to a hand-held telephone, a laptop computer equipped with a mobile broadband adapter, or any other device.

The user equipment (UE) and/or the base station (gNB) may be compatible with the Standard ETSI TS 123 501. Moreover, data transmission over the telecommunication network of that system may be compatible with the Standard ETSI TS 123 003.

In the illustrated embodiment, and for the sake of simplification of the description, it is considered that the telecommunication system comprises a unique user equipment (UE), and a radio access network (RAN) including a unique base station (gNB). However, it is worth noting that no limitation applies to the number of base station(s) (gNB) or to the number of user equipment(s) (UEs). As a consequence, the following developments can be generalized without difficulty by a person skilled in the art to the case where more than one base station (gNB) and more than one user equipment (UE) are considered.

The radio access network (RAN) and the core network (CN) belong to a wireless telecommunications network to which the user terminal (UE) is connected, and are able to communicate with each other in a frequency band associated with this wireless telecommunications network. For the remainder of the description, it is assumed, without limitation, that said telecommunications network is a 5G-type mobile network (the fifth-generation technology standard for cellular networks) compliant with the O-RAN specification « O-RAN Architecture Description 9.0 », O-RAN.WG1.OAD-R003-v09.00, release 3, published in June 2023.

It should be pointed out, however, that the invention remains applicable to other types of telecommunications network, such as a 4G mobile network (the fourth generation of mobile telephony network standards), and/or a B5G network (acronym for "Beyond 5G").

The O-RAN alliance (acronym of "Open Radio Access network") is composed of mobile network operators, manufacturers, suppliers and research and academic organizations working in the field of telecommunications. It has defined the O-RAN architecture which is based on the architecture proposed by the 3GPP consortium, with the aim of facilitating the deployment of Radio Access Network (RAN) virtualization. More generally, the O-RAN alliance aims to define a radio access network (RAN) architecture that enables equipment and/or software modules from different vendors to communicate.

The invention is also applicable to other types of radio access network (RAN). The radio access network (RAN), for example, conforms to the C-RAN ("Cloud-RAN") paradigm. This architecture combines virtualization and centralization of network functionalities of a base station by means of cloud computing. In a C-RAN architecture, the baseband units are no longer located in the immediate vicinity of the base station, but are delocalized and centralized in a "BBU pool". Alternatively, the radio access network (RAN) is, for example, conform to the V-RAN ("Virtual-RAN") paradigm. A virtual radio access network (vRAN) is a radio access network (RAN) whose network functions are deployed as virtualized instances located at different places on the network, for example according to a telecom operator's deployment strategy. This approach has the advantage of limiting the use of expensive equipment, and makes it possible to create isolated sub-networks ("slices"), which coexist simultaneously on the same hardware.

As illustrated in Figure 1, the radio access network (RAN) comprises a radio unit (O-RU), a distributed unit (O-DU) and a central unit (O-CU). In an example, the radio unit (O-RU) is deployed on a base station (gNB), and the distributed (O-DU) and central (O-CU) units are deployed on remote servers. Alternatively, the radio (O-RU), distributed (O-DU) and central (O-CU) units are all deployed on the base station (gNB).

The radio unit (O-RU) is connected to the distributed unit (O-DU) via a "fronthaul" link (OFH), and the distributed unit (O-DU) is connected to the centralized unit (O-CU) via a "midhaul" link (OMH). The network functions of a traditional base station (e.g., a 4G-compliant base station) are distributed among these three units according to a functional split of the OSI layers that best suits the requirements of the telecoms network usage context. This split is, for example, in line with one of the options described in the 3GPP specification "Study on new radio access technology: Radio access architecture and interfaces", TR 38.801, release 14, v14.0.0, published in April 2017, each of which has its own advantages and disadvantages in terms of latency, throughput and implementation complexity. These options are referenced 1 to 6, 7.1, 7.2, 7.3 and 8.

According to another example, this split is in line with option 7.2 as defined by the O-RAN alliance. The O-RAN alliance has considered option 7.2 defined by the 3GPP consortium to propose a split of the low physical layer at the radio unit level (O-RU), and a split of the high physical layer at the distributed unit level (O-DU). These are for example defined in the "O-RAN Hardware Reference Design Specification for Outdoor Macrocell with Split Architecture Option 7.2 2.0", O-RAN.WG7.OMAC-HRD.0-R003-v03.00, release R003, published in June 2023.

The radio unit (O-RU) is then configured to convert a digital signal into a radio signal in the case of a downlink, and vice versa in the case of an uplink. More specifically, the radio unit (O-RU) is configured to manage the lower physical layer (e.g., the RF channel(s)), analog/digital precoding, data transport in accordance with the eCPRI protocol (acronym for "evolved Common Public Radio Interface") and synchronization, for example in accordance with the PTP protocol (acronym for "Precision Time Protocol") and also known as IEEE-1588 and IEC 61588.

Still in accordance with option 7.2, the distributed unit (O-DU) is configured to manage the high physical, MAC (Media Access Control) and RLC (Radio Link Control) sublayers. The centralized unit (O-CU) is configured to manage the Packet Data Convergence Protocol (PDCP), Service Data Adaptation Protocol (SDAP) and Radio Resource Control (RRC) sublayers.

As illustrated in Figure 1, the radio access network (RAN) further comprises a radio access network controller (CTRL). This radio access network controller (CTRL) is configured to control and optimize the spectral efficiency of the radio access network, by controlling the distributed (O-DU) and centralized (O-CU) units via E2 interfaces. It conforms, for example, to the O-RAN Near-RT RIC Architecture 4.0 specification, "O-RAN.WG3.RICARCH-R003-v04.00", release 3, published in March 2023. The controller then operates as a service, for example deployed on a cloud network, and is sometimes called "near-real time RIC" for its ability to handle events requiring action in a relatively short time (e.g., from 10 milliseconds to 1 one second).

To achieve control and optimization of the radio access network, the controller integrates IT applications, also named "xApp". These IT applications (xApp) operate as micro-services, and can also be deployed on a cloud network.

The telecommunications network further comprises a core network (CN). This core network (CN) includes a User Plane Function (UPF) acting as a gateway between the radio access network (RAN) and a data network (DN), such as the Internet or a local/private network. The User Plane Function (UPF) and the data network (DN) are connected via an N6 interface. This User Plane Function corresponds, for example, to the UPF defined by 3GPP specification 23.501 "System architecture for the 5G System (5GS)", version 18.1.0, published in April 2023, and is connected to the centralized unit (O-CU) via an N3 interface.

The core network (CN) further includes an Access & Mobility Management Function, AMF, which is a control plane function that handles connection and management mobility tasks. This AMF corresponds, for example, to the AMF defined by 3GPP specification 23.501 "System architecture for the 5G System (5GS)", version 18.1.0, published in April 2023, and is connected to the centralized unit (O-CU) via an N2 interface.

**Figure 2** illustrates the principle for determining the location area of a user equipment (UE) according to the invention.

For the records, the location area of a user equipment (UE) is determined from a transmission beam selected by the user equipment (UE) for transmitting a message to or going through the base station (gNB), and from a timing advance value associated to that message.

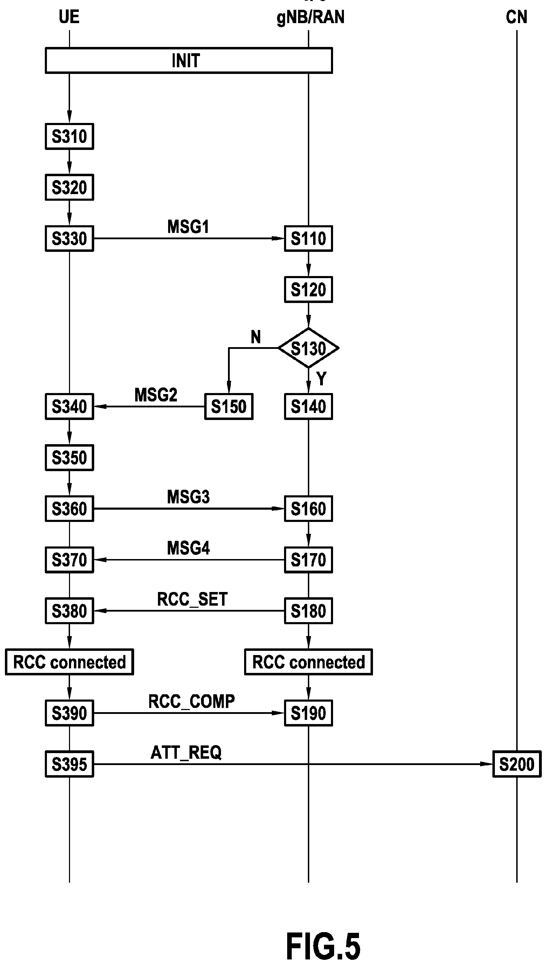

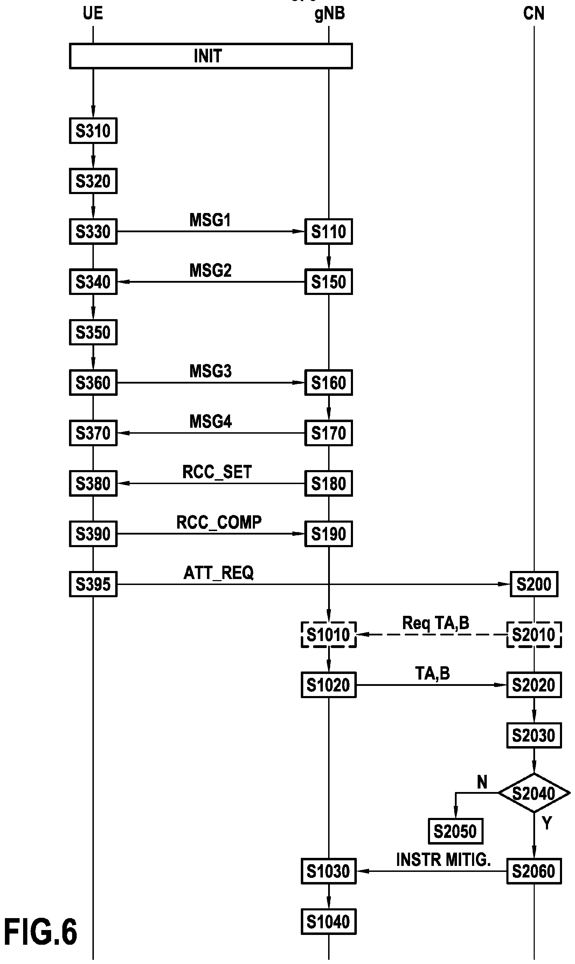

More precisely, in an initialization stage of the mitigation method further described with respect to Figures 5 and 6, a beam formed by a base station (gNB) is selected by a user equipment (UE) for exchanging data between the base station (gNB) and the user equipment (UE). The beam is selected among a plurality of beams, and typically corresponds to the beam having the highest received power.

As illustrated by Figure 2, the base station (gNB) performs a beam sweep over the cell by generating three beams F1, F2 and F3, and the beam F2 is selected by that user equipment (UE). The user equipment then sends a message (e.g., named "MSG1" in the following) to the base station (gNB) using that suitable beam F2. Upon receiving that message, the base station (gNB) computes a timing advance value which corresponds to a length of time a signal carrying the message takes to reach the base station from the user equipment.

The computed timing advance value defines a distance *d* all around the base station (gNB) which is represented on Figure 2 by a dashed circle. However, the user equipment (UE) may not be exactly positioned at the distance *d* from the base station (gNB), but rather in the vicinity of that distance *d*. To that end, it is supposed that the user equipment is at least at a distance *d*1 from the base station, and at worst at a distance *d*2 from that base station, with *d*1 < *d* < *d*2*.* In other words, it is considered that the user equipment (UE) is located in the annulus (ANN) defined by two concentric circles having the base station (gNB) as origin, and of diameters *d*1 and *d*2. In an example, d=5800m, d1 equals 5500 meters and d2 equals 6050 meters.

Moreover, each of the beams formed by the base station defines a beam coverage represented by an angular sector (SEC1, SEC2, SEC3). Since a message was transmitted by the user equipment (UE) to the base station (gNB) using the suitable beam F2, it can be deduced that the user equipment is also located in the angular sector SEC2 associated to that suitable beam.

With further details, the base station obtains the time-frequency characteristic of a signal related to the message transmitted by the user equipment, and determines, e.g., from an association table, the corresponding beam F2 used by the user equipment.

Finally, the location of the user equipment is determined that corresponds to the intersection of the angular sector SEC2, and of the annulus ANN.

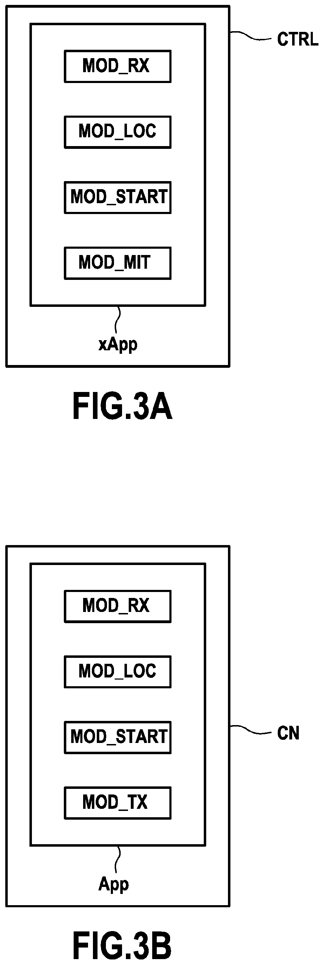

**Figure 3A** illustrates a particular implementation of an electronic device according to the invention. This electronic device belongs to the radio access network (RAN) and is configured to mitigate a cyber-attack. It includes for this purpose a radio access network controller (CTRL), which is for example of type "Near Real Time RIC", and is compliant with the O-RAN specification, Near-RT RIC Architecture 4.0, "O-RAN.WG3.RICARCH-R003-v04.00", release 3, published in March 2023.

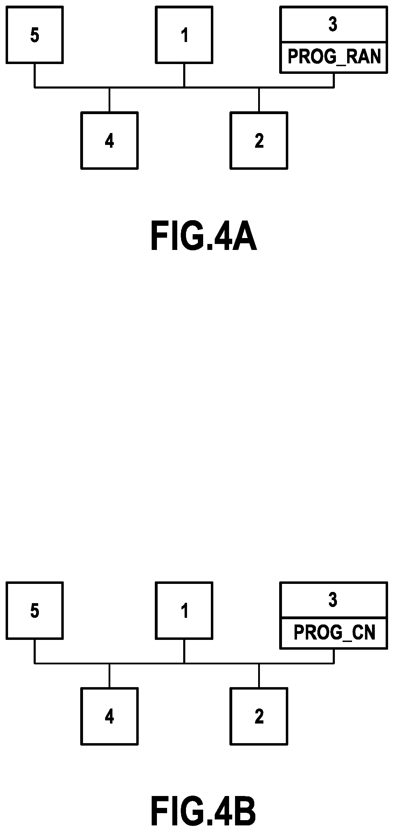

This controller (CTRL) includes an application of type "xApp", which is for example compliant with the O-RAN specification O-RAN Study on Security for Near Real Time RIC and xApps 2.0, "O-RAN.WG11.Security-Near-RT-RIC-xApps-TR.0-R003-v02.00", release 3, published in March 2023. This application "xApp" comprises several modules that will be further described with respect to Figure 4.

**Figure 3B** illustrates another particular implementation of an electronic device according to the invention. This electronic device belongs to the core network (CN) and is configured to mitigate a cyber-attack. It includes for this purpose an application "App" including several modules that will be further described with respect to Figure 4.

**Figure 4A** illustrates an example of the hardware architecture of the electronic device of Figure 3A.

To this end, the electronic device has the hardware architecture of a computer. As shown in Figure 4, the electronic device comprises a processor 1. Although illustrated as a single processor 1, two or more processors can be used according to particular needs, desires, or particular implementations of the electronic device. Generally, the processor 1 executes instructions and manipulates data to perform the operations of the electronic device and any algorithms, methods, functions, processes, flows, and procedures as described in the present disclosure.

The electronic device also comprises communication means 5. Although illustrated as a single communication means 5 in Figure 4A, two or more communication means can be used according to particular needs, desires, or particular implementations of the electronic device. The communication means are used by the electronic device for communicating with another electronic device that is communicatively linked to a radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated electronic device.

The electronic device also comprises a random access memory 2, a read-only memory 3, and a non-volatile memory 4. The read-only memory 3 of the electronic device constitutes a recording medium conforming to the invention, which is readable by processor 1 and on which is recorded a computer program PROG_RAN conforming to the invention, containing instructions for carrying out the steps of the mitigation method according to the invention.

The program PROG_RAN defines functional modules of the electronic device, which are based on or control the aforementioned elements 1 to 5 of the electronic device, and which comprise in particular:
- a module MOD_RX for receiving, from a user equipment (UE), a message (MSG1, ATT_REQ) for attachment of the user equipment (UE) to a telecommunication network (NET);
- a module MOD_LOC for determining a location area of the user equipment (UE) from a transmission beam selected by the user equipment (UE) for transmitting the received message, and from a timing advance value associated to the received message;
- a module MOD_START for determining, from a user equipment's behavior analysis, a possible start of a cyber-attack from at least one user equipment of the determined location area; and,
- a module MOD_MIT for preventing communications associated to the user equipment (UE) to reach the core network (CN).

The functionalities attached to each of the modules are explained in detail later on when describing implementations of said mitigation method.

**Figure 4B** illustrates an example of the hardware architecture of the electronic device of Figure 3B.

To this end, the electronic device has the hardware architecture of a computer. As shown in Figure 4, the electronic device comprises a processor 1. Although illustrated as a single processor 1, two or more processors can be used according to particular needs, desires, or particular implementations of the electronic device. Generally, the processor 1 executes instructions and manipulates data to perform the operations of the electronic device and any algorithms, methods, functions, processes, flows, and procedures as described in the present disclosure.

The electronic device also comprises communication means 5. Although illustrated as a single communication means 5 in Figure 4B, two or more communication means can be used according to particular needs, desires, or particular implementations of the electronic device. The communication means are used by the electronic device for communicating with another electronic device that is communicatively linked to a radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated electronic device.

The electronic device also comprises a random access memory 2, a read-only memory 3, and a non-volatile memory 4. The read-only memory 3 of the electronic device constitutes a recording medium conforming to the invention, which is readable by processor 1 and on which is recorded a computer program PROG_CN conforming to the invention, containing instructions for carrying out the steps of the mitigation method according to the invention.

The program PROG_CN defines functional modules of the electronic device, which are based on or control the aforementioned elements 1 to 5 of the electronic device, and which comprise in particular:
- a module MOD_RX for receiving, from a user equipment (UE), a message (MSG1, ATT_REQ) for attachment of the user equipment (UE) to a telecommunication network (NET);
- a module MOD_LOC for determining a location area of the user equipment (UE) from a transmission beam selected by the user equipment (UE) for transmitting the received message, and from a timing advance value associated to the received message;
- a module MOD_START for determining, from a user equipment's behavior analysis, a possible start of a cyber-attack from at least one user equipment of the determined location area; and,
- a module MOD_TX for transmitting an instruction to prevent communications associated to the user equipment (UE) to reach the core network (CN).

The functionalities attached to each of the modules are explained in detail later on when describing implementations of said mitigation method.

**Figure 5** is a flowchart of a mitigation method according to a first embodiment of the invention.

As shown on Figure 5, the mitigation method comprises an initialization stage (INIT) during which the user equipment UE attempts to establish a connection with the base station, or more precisely with a cell belonging to a selected Public Land Mobile Network (or PLMN).

The connection is established by means of a beamformed operation, i.e. by selecting a suitable beam pair for uplink and downlink transmission after switching among a set of beams. Initially, a Synchronization Signal Block (SSB) reference signal is transmitted by the base station (gNB) through wide beams in downlink transmission. In response, the user equipment (UE) measures all Synchronization Signal Reference Signal Received Power (SSB RSRP) values. The user equipment then selects the best wide beam based on the best SSB RSRP value and reports it to the base station (gNB).

After selection of the best wide beam, the user equipment (UE) needs to find the best narrow beam mapped to the current serving wide beam. To that end, the base station (gNB) transmits Channel State Information Reference Signals (CSI-RS) on all narrow beams. In response, the user equipment measures all CSI-RS Layer 1(L1)-RSRP values and reports it to the base station (gNB). Thus, the base station (gNB) assigns the best narrow beam based on the best power value to the user equipment (UE). This initial random access transmission in downlink enables selection of the best gNB transmitted beam or the best UE receive beam.

This step corresponds for example to the "P1 stage" as described in section 6.1.6.1 of the 3GPP specification #38.802, "Study on new radio access technology Physical layer aspects", version 14.2.0, published on September 26, 2017.

The mitigation method further comprises a step S310 during which a Physical Random Access Channel (PRACH) preamble is obtained by the user equipment (UE). In particular implementations, the obtaining step comprises randomly selecting, by the user equipment (UE), a preamble among a set of preambles associated to a cell to which the user equipment (UE) belongs. In a variant V1, the obtaining step comprises receiving the preamble from the base station.

Then, during a step S320, the user equipment (UE) determines a transmission power to apply for transmitting a first message (MSG1) including the PRACH preamble obtained at step S310. In particular implementations, this transmission power to apply is computed as a function of an initial RACH preamble power, a Power Ramp Step and of a number of previous attempts to transmit the first message (MSG1). This transmission power to apply is for example computed in compliance with section 5.1.1 of the 3GPP specification #38.321, "Medium Access Control (MAC) protocol specification", v17.6.0, published in September, 2023.

The mitigation method then comprises a step S330 of transmitting, by the user equipment (UE) and to the base station (gNB), a first message (MSG1) including the PRACH preamble obtained at step S310. This message (MSG1) is received by the base station (gNB) during a step S110. This step S110 is for example implemented by the module MOD_RX of the electronic device of Figure 3A. That message (MSG1) is for example compliant with the MSG1 message defined in the 3GPP specification TS 38.300, V17.5.0, published on June, 2023.

Then, the location area of that user equipment (UE) is determined by the base station (gNB) during a step S120. This step S120 is for example implemented by the module MOD_LOC of the electronic device of Figure 3A. This location area is determined from the suitable transmission beam selected by the user equipment (UE) for transmitting the message (MSG1), and from a timing advance value associated to that message (MSG1). In particular implementations, this location area is determined as previously described with respect to Figure 2. To that end, the base station (gNB) is configured to:
- compute a timing advance value and determine a distance *d* all around the base station (gNB) from the computed timing advance value;
- determine an annulus defined by two concentric circles having the base station (gNB) as origin, and of diameters *d*1 and *d*2, with *d*1 < *d* < *d*2;
- determine an angular sector representing coverage of the suitable beam used for transmitting this message (MSG1); and,
- determine the location area of the user equipment as the result of the intersection between the determined angular sector and the determined annulus.

The mitigation method then comprises a step S130 of determining, from a user equipment's behavior analysis, a possible start of the cyber-attack from at least one user equipment of the determined location area. This step S130 is for example implemented by the module MOD_START of the electronic device of Figure 3A. In particular implementations, statistics based on the considered beam and the timing advance value are generated, and the user equipment's behavior analysis comprises determining whether a number of messages for attachment to the telecommunication network superior to a predetermined threshold is emitted from that determined location area or from an area in the vicinity of that determined location area.

In one particular example, if the number of attachment requests received from a given location area during a period of 10 seconds is superior to 100, it can then be deduced that a possible cyber-attack started using user equipment located at that given location area.

If it is concluded that a cyber-attack possibly started from the determined location area, then step S140 is implemented which consists in preventing communications associated to the user equipment (UE) to reach the core network (CN). This step S140 is for example implemented by the module MOD_MIT of the electronic device of Figure 3A. To that end, the given base station (gNB) may be configured to drop messages emitted from that location area and received by that given base station (gNB).

Thus, if a message emitted from that location area and received by that base station (gNB) was initially destined to be transferred to the core network (CN) of the telecommunication network (NET), it is simply ignored by the base station (gNB). In addition, if a message emitted from that location area was initially destined to release sending of another message by this base station (gNB) to the core network (CN), the base station (gNB) then does not send the other message to the core network (CN).

In a variant V2, the base station (gNB) is configured to stop beamforming in the direction of the suitable beam selected by the user equipment (UE) for transmitting the message (MSG1).

Going back to step S130 of Figure 5, if on the contrary it is concluded that no cyber-attack started from the determined location area, then steps S150-S190, S200 and S340-S395 are implemented.

Step S150 corresponds to the transmission, by the base station (gNB), of a second message (MSG2). to the user equipment (UE). That second message (MSG2) includes a timing advance (TA) command for timing adjustment, a resource allocation for allowing the user equipment (UE) to respond to the base station (gNB), and a Random Access Preamble IDentifier (RAPID). The timing advance (TA) command allows the user equipment (UE) to change the PUSCH/PUCCH transmission to make it better aligned with the sub-frame timing at the base station side

This second message (MSG2) is sometimes denoted "Random Access Response", and its format is for example compliant with section 6.2.3 of the 3GPP specification #38.321, "Medium Access Control (MAC) protocol specification", v17.6.0, published in September, 2023.

This second message (MSG2) is received by the user equipment (UE) at step S340. The mitigation method further comprises a step S350 during which the user equipment (UE) determines whether the Random Access Preamble Identifier (RAPID) corresponds or not to the transmitted PRACH preamble. If so, the user equipment (UE) transmits, to the base station (gNB), a third message MSG3 on the Physical Uplink Shared Channel (PUSCH) and using the resource allocation included in the second message MSG2. That third message MSG3 may include a user equipment identifier that may correspond to a NAS Identifier (such as the S-TMSI, a shortened form of the GUTI) or to a random number. This third message (MSG3) is sometimes denoted "PUSCH", and its format is for example compliant with section 5.3.3.3 of the 3GPP specification #38.331, "NR; Radio Resource Control (RRC); Protocol specification", v17.6.0, published in September, 2023.

That third message MSG3 is received by the base station (gNB) at step S160. After processing that third message MSG3, the base station (gNB) transmits at step S170 a fourth message MSG4 which is received by the user equipment (UE) at step S370. This fourth message (MSG4) includes MAC data for contention resolution. More precisely, this fourth message MSG4 contains the user equipment identifier, which confirms that the base station (gNB) has correctly identified the user equipment (UE), and that contention has been resolved. This fourth message (MSG4) is sometimes denoted "Contention Resolution", and its format is for example compliant with section 6.1.3.3 of the 3GPP specification #38.321, "Medium Access Control (MAC) protocol specification", v17.6.0, published in September, 2023.

A RRC connection is then established between the user equipment (UE) and the base station (gNB). To that end, the base station (gNB) controls the user equipment's uplink and downlink radio links, and allocates it a Signaling Radio Bearer (SRB) which corresponds to a user equipment's dedicated radio link. Then, the base station (gNB) transmits at step S180 a message RCC_SET including that allocated SRB to the user equipment (UE). The message RCC_SET is received by that user equipment (UE) at step S380. This message is sometimes denoted "RCC Connection Setup" or "RCC Setup", and its format is for example compliant with section 6.2.2 of the 3GPP specification #38.331, "NR; Radio Resource Control (RRC); Protocol specification", v17.6.0, published in September, 2023.

The mitigation method then comprises a step S390 during which the user equipment (UE) acknowledges the base station (gNB) with a message RCC_COMP (for RRC Connection Setup Complete) via the dedicated radio link. This RCC_COMP message is received by the base station at step S190. The format of this message is for example compliant with section 6.2.2 of the 3GPP specification #38.331, "NR; Radio Resource Control (RRC); Protocol specification", v17.6.0, published in September, 2023.

The mitigation method then comprises a step S395 during which the user equipment (UE) transmits a Registration Request message (ATT_REQ) to the core network (CN). The format of this message is for example compliant with the 3GPP specification #23.502, "Procedures for the 5G System (5GS)", v18.3.0, published in September, 2023. This message is first received by the base station (gNB) which transfers it to the core network (CN). This message is thus received by the AMF module of the core network (CN) at step S200. For the sake of convenience, transmissions of the RCC_COMP and ATT_REQ messages are presented as being distinct. However, it is worth noting that for greater efficiency, the ATT_REQ message may be transmitted to the base station in the RCC_COMP message.

**Figure 6** is a flowchart of a mitigation method according to a second embodiment of the invention.

Steps common to Figures 5 and 6 bear the same reference signs and have identical features, so that these common steps are generally not described again for the sake of simplicity. In particular, the mitigation method of Figure 6 comprises steps S310 to S390 implemented by the user equipment (UE), steps S110, S150-S190 implemented by the base station (gNB), and step S200 implemented by the core network, all these steps being previously described with respect to Figure 5.

The Registration Request message (ATT_REQ) is received by the AMF module of the core network (CN) at step S200, and an application (App) of the core network (CN) is notified of that reception. Such application (App) corresponds for example to the application App of Figure 3B. This step S200 is for example implemented by the module MOD_RX of the electronic device of Figure 3B.

The mitigation method then comprises a step S2010 during which the core network (CN) requests for the timing advance (TA) value associated to the message MSG1, and data B for identifying the angular sector associated to the user equipment UE. This request REQ is received by the base station at step S1010. In response, the base station (gNB) transmits at step S1020 the requested information to the core network (CN). The requested information is received by the core network (CN) at step S2020.

The mitigation method then comprises a step S2030 during which the location area of that user equipment (UE) is determined by the core network (CN). This step S2030 for example implemented by the module MOD_LOC of the electronic device of Figure 3B. This location area is determined as previously described with respect to step S120 of Figure 5.

Then, at step S2040, the core network (CN) determines, from a user equipment's behavior analysis, a possible start of a cyber-attack from at least one user equipment of the determined location area. This step S2040 is for example implemented by the module MOD_START of the electronic device of Figure 3B. This possible start of a cyber-attack is determined as previously described with respect to step S130 of Figure 5.

If it is concluded that no cyber-attack started from the determined location area, then step S2050 is implemented which includes steps for allowing data transmission between the user equipment (UE) and a data network (DN) such as the data network of Figure 1. On the contrary, if it is concluded that a cyber-attack possibly started from the determined location area, then step S2060 is implemented which consists in transmitting, to the base station (gNB), an instruction INSTR MITIG to prevent communications associated to the user equipment (UE) to reach the core network (CN). This step S2060 is for example implemented by the module MOD_TX of the electronic device of Figure 3B. This instruction INSTR MITIG is received by the base station (gNB) at step S1030.

Then, the mitigation method comprises a step S1040 implemented by the base station (gNB) and which consists in preventing communications associated to the user equipment (UE) to reach the core network (CN). This step is implemented as previously described with respect to step S140 of Figure 5.

In a variant V3, steps S2010, S1010, S1020 and S2020 are not implemented, but the timing advance (TA) value associated to the message MSG1, and data B for identifying the angular sector associated to the user equipment UE are transmitted, by that user equipment UE and to the to the core network (CN), with the Registration Request message (ATT_REQ) (step S395).

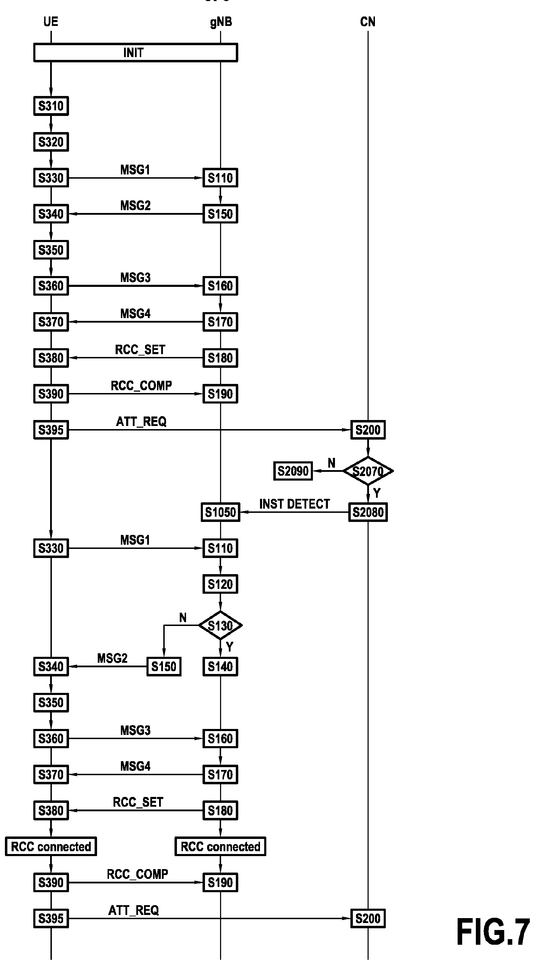

**Figure 7** is a flowchart of a mitigation method according to a third embodiment of the invention.

In that third embodiment, the detection is now applied by the core network (CN) of the attack. As further detailed below, the core network send a message INST DETECT to the base station (gNB) in order to trigger the monitoring of timing advance (TA) and the angular sector or the beam associated to all users of the cell, and then applies for example the mitigation method illustrated by Figure 5.

Steps common to Figures 5 and 6 bear the same reference signs and have identical features, so that these common steps are generally not described again for the sake of simplicity. In particular, the mitigation method of Figure 7 comprises steps S310 to S395 implemented by the user equipment (UE), steps S110-S190 implemented by the base station (gNB), and step S200 implemented by the core network, all these steps being previously described with respect to Figure 5.

For the records, the Registration Request message (ATT_REQ) is received by the AMF module of the core network (CN) at step S200, and an application (App) of the core network (CN) is notified of that reception. This step S200 is for example implemented by the module MOD_RX of the electronic device of Figure 3B.

The mitigation method then comprises a step S2070 of determining, from a user equipment's behavior analysis, a possible start of the cyber-attack from at least one user equipment of the determined location area. This step is implemented in a similar way to steps S130 or S2040 previously described.

If it is concluded that no cyber-attack started from the determined location area, then step S2090 is implemented. If, on the contrary, it is concluded that a cyber-attack possibly started from the determined location area, then step S2080 is implemented which consist in the transmission, by the core network (CN) and to the base station (gNB), of a message INST DETECT that comprises a request to trigger the monitoring of timing advance (TA) and the angular sector or the beam associated to all users of the cell. This message is received by the base station (gNB) at step S1050, which thus triggers the monitoring of timing advance (TA) and the angular sector or the beam associated to all users of the cell.

In a particular implementation, the mitigation method according to that third embodiment of the invention then applies the mitigation method according to the first embodiment of the invention. In a variant V4, the mitigation method according to that third embodiment of the invention then applies the variant V3 described in reference to Figure 6.

Up to now, the invention has been described in the case where the user equipment is prevented from flooding the core network using "physical characteristics" of that user equipment (e.g., the timing advance value and the suitable beam used by that user equipment for transmitting message MSG1). However, in a variant, the mitigation method of the invention further comprises a step of determining whether the user equipment (UE) was previously registered to the telecommunication network (NET) or to an associated telecommunication network, and if so, the step of preventing comprises transmitting, by the core network (CN) and to the base station (gNB), an identifier to ban, the identifier uniquely identifying the user equipment (UE) among a plurality of user equipment's registered to the telecommunication network or to the associated telecommunication network. This identifier can correspond for example to an IMSI (acronym of International Mobile Subscriber Identity), a M-TMSI (acronym of M-Temporary Mobile Subscriber Identity) or a 5G-S-TMSI.

## Claims

1. A computer-implemented method for mitigating a cyber-attack in a telecommunication system comprising a user equipment (UE) and a base station (gNB) connected to a core network (CN) of a telecommunication network (NET), the method comprising:
- receiving (S110, S200), from the user equipment (UE), a message (MSG1, ATT_REQ) for attachment of the user equipment (UE) to the telecommunication network (NET);
- determining (S120, S2030) a location area of the user equipment (UE) from a transmission beam selected by the user equipment (UE) for transmitting the received message, and from a timing advance value associated to the received message;
- determining (S130, S2040), from a user equipment's behavior analysis, a possible start of the cyber-attack from at least one user equipment of the determined location area; and, as a result of the determining,
- preventing (S140, S2060) communications associated to the user equipment (UE) to reach the core network (CN).

2. The mitigation of Claim 1, wherein the timing advance value defines an annulus around the base station (gNB), wherein the transmission beam selected by the user equipment (UE) for transmitting the received message defines an angular sector centered around the base station (gNB), wherein the location area corresponds to an intersection of the annulus and of the angular sector.

3. The mitigation method of one of Claims 1 or 2, wherein the user equipment's behavior analysis comprises determining whether a number of messages for attachment to the telecommunication network (NET) superior to a predetermined threshold is emitted from the location area.

4. The mitigation method of one of Claims 1 to 3, wherein preventing (S140, S2060) communications associated to the user equipment (UE) to reach the core network (CN) comprises at least one of, by the base station (gNB):
- dropping message(s) emitted from the location area;
- stopping beamforming in a direction of the beam selected by the user equipment (UE) for transmitting the received message.

5. The mitigation method of one of Claims 1 to 4, wherein the base station (gNB) belongs to a radio access network (RAN) of the telecommunication network (NET), wherein the received message (MSG1) includes data for identifying a random access preamble selected by the user equipment (UE) from a set of predefined preambles, wherein the steps of receiving (S110), determining (S120) a location area, determining (S130) a cyber-attack and preventing (140) are implemented in the radio access network (RAN).

6. The mitigation method of one of Claims 1 to 4, wherein the received message (ATT_REQ) includes user equipment network capability data, wherein the steps of receiving (S110), determining (S120) a location area, determining (S130) a cyber-attack and preventing (140) are implemented in the core network (CN).

7. The mitigation method of Claim 6, further comprising, at the core network (CN), determining whether the user equipment (UE) was previously registered to the telecommunication network (TN) or to an associated telecommunication network, and if so, the step of preventing comprises transmitting, by the core network (CN) and to the base station (gNB), a M-Temporary Mobile Subscriber Identity (M-TMSI) to ban, the M-Temporary Mobile Subscriber Identity uniquely identifying the user equipment (UE) among a plurality of user equipment's registered to the telecommunication network or to the associated telecommunication network.

8. The mitigation method of one of Claims 1 to 7, wherein the user equipment (UE) and/or the base station (gNB) are compatible with the Standard ETSI TS 123 501.

9. The method of one of Claims 1 to 8, wherein data transmission over the telecommunication network is compatible with the Standard ETSI TS 123 003.

10. A computer program (PROG_RAN, PROG_CN) which on execution by an electronic device causes the electronic device to execute the mitigation method according to one of Claims 1 to 9.

11. A non-transitory computer-readable medium storing a program which, when executed by a microprocessor or computer system, causes the microprocessor or computer system to perform the mitigation method according to one of Claims 1 to 9.

12. An electronic device of a telecommunication system comprising a user equipment (UE), a base station (gNB) connected to a core network (CN) of a telecommunication network (NET), the electronic device including an application software (App, xApp) comprising:
- a module (MOD_RX) for receiving, from a user equipment (UE), a message (MSG1, ATT_REQ) for attachment of the user equipment (UE) to a telecommunication network (NET);
- a module (MOD_LOC) for determining a location area of the user equipment (UE) from a transmission beam selected by the user equipment (UE) for transmitting the received message, and from a timing advance value associated to the received message;
- a module (MOD_START) for determining, from a user equipment's behavior analysis, a possible start of a cyber-attack from at least one user equipment of the determined location area ; and,
- a module (MOD_MIT) for preventing communications associated to the user equipment (UE) to reach the core network (CN) or a module (MOD_TX) for transmitting an instruction to prevent communications associated to the user equipment (UE) to reach the core network (CN).
